# EUROPEAN PATENT SPECIFICATION

(11) **EP 0 811 432 B1**
(45) Date of publication and mention of the grant of the patent: **16.04.2003**
(21) Application number: 97850084.1
(22) Date of filing: 03.06.1997
(51) Int. Cl.: B08B 9/093, B08B 9/08, E04H 4/16, A01K 61/00

(54) **Device for cleaning of water tanks**
Vorrichtung zur Reinigung von Wasserbehältern
Dispositif de nettoyage de réservoirs d'eau

(30) Priority: 04.06.1996 SE 9602216
(43) Date of publication of application: 10.12.1997
(73) Proprietor: Pehrson, Jonas, 690 45 Asbro (SE)
(72) Inventor: Drougge, Claes Mikael, 590 55 Sturefors (SE); Pehrson, Karl Jonas, 690 45 Asbro (SE)

(56) References cited:
- FR-A- 2 416 808
- US-A- 4 304 022
- US-A- 5 093 949
- US-A- 5 205 174
- US-A- 5 253 812
- US-A- 5 363 935

## Description

The present invention relates to a device comprising a remotely controlled machine for cleaning of inner surfaces, preferably in drinking water tanks, comprising electrically powered crawler tracks, brushes and a pump unit that discharges sludge and particles via a hose into a sludge container outside the tank, a video camera, spot-lights and a control unit.

Existing devices of similar types have various disadvantages.
The apparatus according to US 5,093,949 has a programmed action pattern which provides that the surface to be cleaned is known and without obstacles. The sucked up material is filtered and delivered to a sludge-collecting tank on a vehicle outside the water tank. The device also comprises another vehicle with a hydraulic power supply. If obstacles like columns, steps or the like are present, the device must be controlled manually to overpower the programmed pattern. The position of the device is determined by checking length and angle of tether line. There are no devices like sonars and video cameras to facilitate navigation and checkout of the result of the cleaning.

The cleaning apparatus described in US 3,753,265 is provided with a number of mercury switches which are activated when the device hits an obstacle and an external logic circuit controls the heading of the device in an uncontrolled way whereby parts of the bottom surface can be left uncleaned. One version does not have any logic but is operated manually. This vehicle is also without devices for remote control without visual contact from the operator. The sucked up water is filtered in an internal filter, which gives the device a very poor cleaning capacity as the filter in a short time will be stowed by mud and particles.
Consequently it is not suitable for large tanks with relatively thick layers of sludge and fine grained sediments. The device is provided with only one rotating brush.

The device according to US 4,304,022 is also operating with a filter arranged on the vehicle itself. The filter has to be emptied and cleaned as often as the filter get stowed at removing of fine grained sediment and particles.
This apparatus also lacks devices like sonar or video camera for safe and exact navigation.

US 5,205,174 discloses an apparatus mainly designed for inspection purposes. It has only a fixed, forward directed video camera for navigation purposes. This is not sufficient for navigating the machine for thorough cleaning a water tank with a complicated inner structure.

FR 2 416 808 discloses a machine designed for inspection and transportation purposes. It is equipped with two forward directed video cameras one of which is rotatable a limited angle in a vertical plane. This is not either sufficient for navigating a machine for thorough cleaning a water tank with a complicated inner structure.

It obvious that the devices described above lack possibility for convenient and safe navigation in large, deep tanks with obstacles of various kinds and with relatively deep layers of sludge and particles on the bottom and the walls. The quality of the cleaning will then be jeopardised.

The object with the present invention is to eliminate the above mentioned disadvantages with known devices and provide a machine provided with equipment that can locate and visualise obstacles in a water tank and facilitate for an operator to unimpededly navigate between the obstacles in tanks of complicated design and even climb vertical walls. The water distribution shall proceed without disturbances during the cleaning operation.

This object is achieved with a device according to the invention which is characterised in that the machine has a sonar unit that produces signals representing echoes from the bottom and from obstacles in the surroundings of the machine, said signals being visualised on a presentation unit in a control unit, and in that a video camera is remotely controlled and can be directed to identify the obstacles by an operator by means of the visualised sonar echo on the presentation unit to facilitate safe and exact navigation in the water tank for effective cleaning .

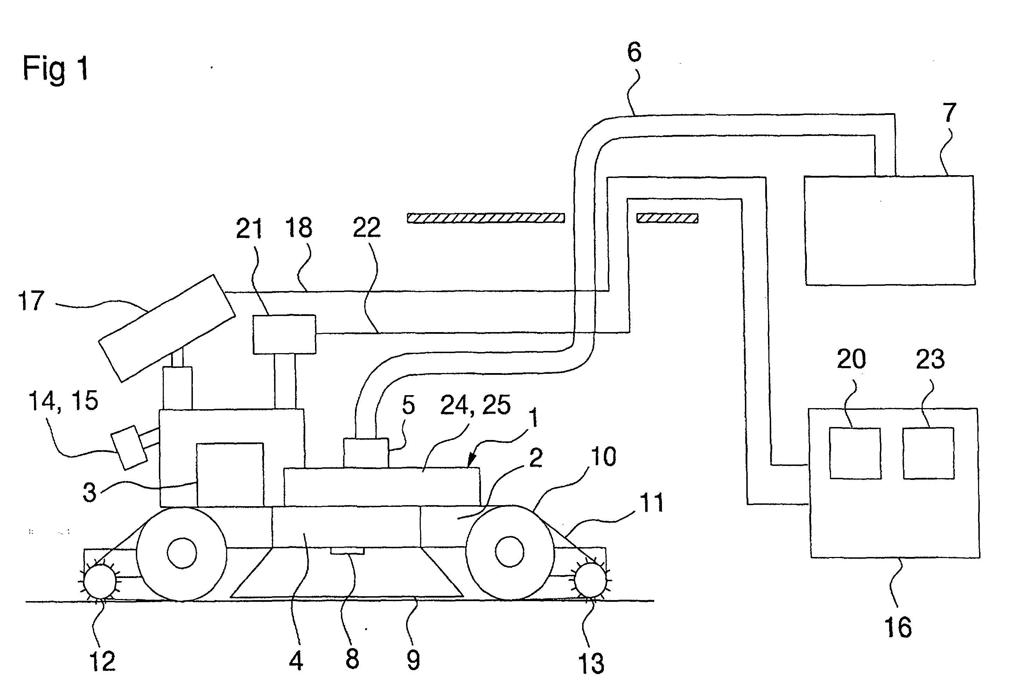

The device will now be described more in detail with reference to the attached drawing on which
Fig 1 shows a schematic side view of the device in a water tank, a collection tank and a control unit outside the tank.

A machine 1 has a framework 2 on which a preferably electrical power unit 3 is mounted. Centrally on the framework a pump unit 4 is mounted the outlet 5 of which, via a hose 6, leads the sucked sludge and particles to a container 7 located outside the water tank.
The container can be placed on the ground or on a trailer. The sucked up material can also be lead to a sewer nearby.
On top of the framework 2 there are two spotlights 14 and 15 and a video camera 17.
The camera 17 can be operated from a control unit 16 and the image is presented on a monitor 20. A sonar unit 21 is connected via a signal line 22 to the control unit 16 to show the operator echoes from the bottom and the surroundings on a presentation unit 23. By means of the information from the video image and the sonar echo the operator can control the vehicle with high precision even if there are obstacles present, for instance plumbing or the like. To manoeuvre vertically, for instance due to steps in the bottom surface or at launching or lifting up, two blowable ballast tanks 24 and 25 on the top of the framework can be filled or emptied.

The advantage with a device of the described type is that it is not necessary to engage divers and expose them to risks at work in complicated under-water structures. The device is easily operated by one single operator and the working time is drastically reduced compared to older methods or use of devices that cannot be operated by means of images from the bottom or wall profile or from obstacles consisting of columns, plumbing etc. The whole cleaning operation can be followed and if necessary be recorded on diagrams and videotape. The big suction capacity prevents the water from becoming muddy and suction can thus be performed without interrupting the water supply.

The device is thoroughly tested by cleaning a drinking water tank with a volume of 10.000 m³ and with a bottom area of 2300m² and with 185 supporting columns. The operation took two days and no interruption in the water supply was necessary.
The device has here been described in an application for water tanks but can of course be utilised for cleaning of tanks containing different, non inflammable liquids.

## Claims

1. A device comprising a remotely controlled machine (1), for cleaning of inner surfaces, preferably in drinking water tanks, comprising electrically powered crawler tracks (10), brushes (12, 13) and a pump unit (4) that discharges sludge and particles via a hose (6) into a sludge container (7) outside the tank, a video camera (17), spotlights (14, 15) and a control unit (16),
**characterised in**
**that** the machine has a sonar unit (21) that produces signals representing echoes from the bottom and from obstacles in the surroundings of the machine, said signals being visualised and recorded during the whole operation in a presentation unit (23) in the control unit (16), and in
**that** the video camera is remotely controlled and directed by an operator to identify and locate the obstacles by means of the visualised and recorded sonar echo in the presentation unit (23) to facilitate safe and exact navigation in the water tank for effective cleaning.

## Patentansprüche

1. Vorrichtung, welche eine ferngesteuerte Maschine (1) zum Reinigen von Innenflächen, vorzugsweise in Trinkwassertanks, aufweist, wobei die Maschine Raupenlaufbahnen (10), Bürsten (12, 13) und eine Pumpeneinheit (4), die Schlamm und Partikel über einen Schlauch (6) in einen Schlammbehälter (7) außerhalb des Tanks abfließen lässt, ferner eine Videokamera (17), Scheinwerfer (14, 15) und eine Steuereinheit (16) aufweist,
**dadurch gekennzeichnet,**
**dass** die Maschine eine Ultraschall-Einheit (21) aufweist, welche Signale erzeugt, die Echos vom Boden und von Hindernissen in der Umgebung der Maschine darstellen, wobei diese Signale während des gesamten Betriebs in einer Darstellungseinheit (23) in der Steuereinheit (16) bildhaft dargestellt und aufgezeichnet werden, und
**dass** die Videokamera ferngesteuert ist und von einem Maschinenbediener dirigiert wird, um Hindernisse mit Hilfe des visualisierten und aufgezeichneten Ultraschall-Echos in der Darstellungseinheit (23) zu identifizieren und zu lokalisieren, damit eine sichere und genaue Navigation in dem Wassertank zur wirksamen Reinigung erleichtert wird.

## Revendications

1. Dispositif comprenant un engin commandé à distance (1) pour le nettoyage des surfaces internes, de préférence dans les réservoirs d'eau potable, comprenant des chenilles électriques (10), des brosses (12,13) et un groupe de pompage (4), lequel déverse les boues et particules par un tuyau dans un conteneur de boues (7) à l'extérieur du réservoir, une caméra vidéo (17), des spots (14,16) ainsi qu'une unité de commande qui se **caractérise par le fait que** l'engin est doté d'un dispositif sonar (21) qui émet des signaux constituant les échos qu'il reçoit du fond et des obstacles situés dans son environnement immédiat, lesdits signaux étant visualisés et enregistrés pendant toute la durée de l'opération dans un module de présentation (23) de l'unité de commande (16) et **par le fait que** la caméra vidéo est commandée à distance et orientée par un opérateur afin d'identifier et de localiser les obstacles au moyen de l'écho de sonar visualisé et enregistré dans le module de présentation (23) dans le but de faciliter une navigation sûre et précise dans le réservoir d'eau pour un nettoyage efficace.
